# EUROPEAN PATENT APPLICATION

(11) **EP 4 327 695 A1**
(43) Date of publication of application: **28.02.2024**
(21) Application number: 22774385.3
(22) Date of filing: 08.03.2022
(51) Int. Cl.: A47B 81/00, C12L 11/00

(54) **SUPPORT FOR BARRELS**

(30) Priority: 24.03.2021 ES 202130587 U
(71) Applicant: Candela Diaz, Francisco Antonio, 03203 Elche / Alicante (ES)
(72) Inventor: Candela Diaz, Francisco Antonio, 03203 Elche / Alicante (ES)
(74) Representative: Maldonado Jordan, Julia
(86) International application number: PCT/ES2022/070135
(87) International publication number: WO 2022/200653

(57) **Abstract**

Barrel support comprising at least one first frontal structure, at least a second frontal structure, and at least four vertical elements, characterized by: the first frontal structure and the second frontal structure comprise at least two longitudinal elements configured in a divergent or substantially divergent way according to an ascending direction; the first frontal structure and the second frontal structure are joined by at least one central crossbar, at least two upper crossbars and at least two lateral crossbars located in the lateral or substantially lateral zone of the first frontal structure and/or the second frontal structure; and the vertical elements are located at the vertices of the support and are configured to support the central crossbars of the support for barrels stacked above.

## Description

### TECHNICAL FIELD

The present invention refers to the field of liquid storage in barrels or other liquid containment elements, more specifically, it refers to the structural elements that serve as support and support of the barrels or other liquid storage elements, which have as their objective a modular configuration, adaptable to any room, and easy to transport and install.

The device object of this invention has a specific application in the sectors dedicated to the manufacture, distribution and sale of stackable modular structures for the wine industry, such as the wine and other beverage winery industry.

### BACKGROUND OF THE INVENTION

Currently, the stackable structural supports that are applicable in the winery industry are widely known, with which a stacking of barrels containing liquid, such as wine, cava or other similar drinks, is sought.

These structural supports must be prepared to withstand and support a considerable weight, made up of numerous barrels stacked and stored inside a room, so they must include solid structures with sufficient mechanical resistance, assuming a high cost at the time of installation, and implying difficulties when adapting them to the different spaces used by winemakers in the storage of this type of elements.

In this sense, there are numerous documents in the state of the art, as well as various technologies, which aim to achieve different structures intended for the storage of barrels from modular supports, in which the lower structures will serve as support for the upper structures.

In this way, through the stacking, vertical or three-ball, of two or more supports, a complete structure capable of adapting to the needs of the spaces intended for the storage of barrels will be achieved.

That is why we can find state-of-the-art documents dedicated to solving the problems mentioned.

For example, we can find the document DE602004004872, in which a support for a barrel is described, of the type that comprises a structure that allows two barrels to be placed on a single support, which are moved when stacking identical supports, each part of the support having a carriage that can be moved perpendicularly to the front plane of the support. Where each wagon comprises a rectangular frame with rollers, located at the vertices of the rectangle, which rotate freely on their corresponding axes, forming the four supports of the barrel on the wagon. This allows a rotational movement of the barrel on its own axis.

Document ES2169713 also belongs to the state of the art, in which a support for barrels is described, which incorporates four support shoes on the ground and/or on other supports, to which is attached a frame with two divergent lower tubes in the ascending direction, and two upper tubes, perpendicular to the support plane of the shoes, adopting a coplanar arrangement, both frames being joined by joining the vertical tubes.

We can also find document FR2777974, which describes a support for barrels comprising a structure, preferably metallic, which includes a pair of crossbars, a pair of sleepers, and four columns. Forming a structure with a rectangular contour, converging the ends of the crossbars and sleepers in the corresponding tubular profiles, vertically oriented, and which are configured as a means of union of the largers and crossbars, and as a means to receive the union of the corresponding columns.

Finally, we can find document ES1164583, which describes a support device for barrels that comprises at least one support module, where each module comprises at least two housings to house at least two barrels, characterized by the fact that each support module comprises two frontal structures, with V-shaped geometry, two side crossbars, two lower crossbars and a central crossbar. That are configured to connect the two front structures together, defining together with these front structures, the housings for the barrels.

Understanding this last document, as the closest document of the state of the art, it is still configured as a system that only allows a storage medium to the three-ball, and that also does not allow the use of a double barrel washer.

That is why it is necessary to obtain a new barrel storage device, which is completely stackable, according to a vertical configuration, which also allows the use of a double barrel wash, without any interference between it and the barrel stacking structure itself.

### SUMMARY OF THE INVENTION

The support for barrels that the invention proposes is configured, therefore, as a remarkable novelty within its field of application, since according to its implementation and in an exhaustive way the aforementioned objectives are satisfactorily achieved, being the characteristic details that make it possible and that distinguish them conveniently included in the final claims that accompany this description.

The present invention proposes a system for the storage of barrels, or other liquid-container elements, according to a vertical stacking, which allows the attachment of at least two barrels or other storage systems, and which allows the use of any barrel wash system, including double barrel washes.

On the other hand, the system proposed by the present invention will include additional auxiliary elements that will facilitate the manipulation of the barrels in the loading and unloading maneuvers of them in the structure, as well as prevent the barrels from being damaged in the aforementioned maneuvers.

To achieve this, the present invention proposes a support that comprises at least two frontal structures, composed of two longitudinal elements arranged in a divergent way or substantially in a divergent way, in an ascending direction.

Likewise, the support comprises at least one central crossbar, and two lateral crossbars, which will serve as a horizontal structure, and as a union between both front structures, configuring a rectangular or substantially rectangular support.

In this way, a support for barrels is configured, in which at least two of these elements can be stored, thanks to some support elements located in the support structure itself, in which the barrels will rest.

Additionally, and as mentioned above, these support elements may include a rolling element, as a cylindrical wheel or a free-turning sphere, which will facilitate the manipulation of the barrels inside the structure object of the present invention.

Likewise, the structure will comprise at least four vertical elements, as support pillars. which will be located in the corners of the rectangular plan support, where the sides of greater length will be comprised by the front structures, and the sides of shorter length will be comprised by the side beams.

On the other hand, and to achieve the possibility of vertical stacking, the legs will include elements of union at their ends, which will preferably be carried out by means of a male-female configuration, so that the male is located at a first end of the pillars, and the female will be located at a second end of the pillars.

In this way, the pillars of a certain support will rest on the pillars of the lower support, and in turn will serve as a support for a higher one. Achieving optimal support thanks to the male-female union described above.

The support for barrels and the set of elements described represent an innovation of structural and constitutive characteristics unknown until now, reasons that, together with their practical usefulness, give it sufficient foundation to obtain the privilege of exclusivity that is requested.

### DESCRIPTION OF THE DRAWINGS

To complement the description that is being made and in order to help a better understanding of the characteristics of the invention, it is accompanied as an integral part of said description, a set of drawings in which, for illustrative and not limiting, the following has been represented:

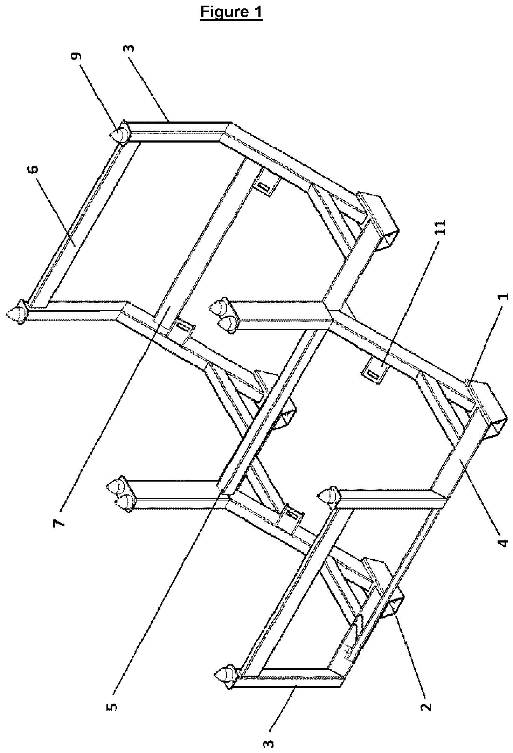

Figure 1.- Example of the invention for stacking the tresbolillo.

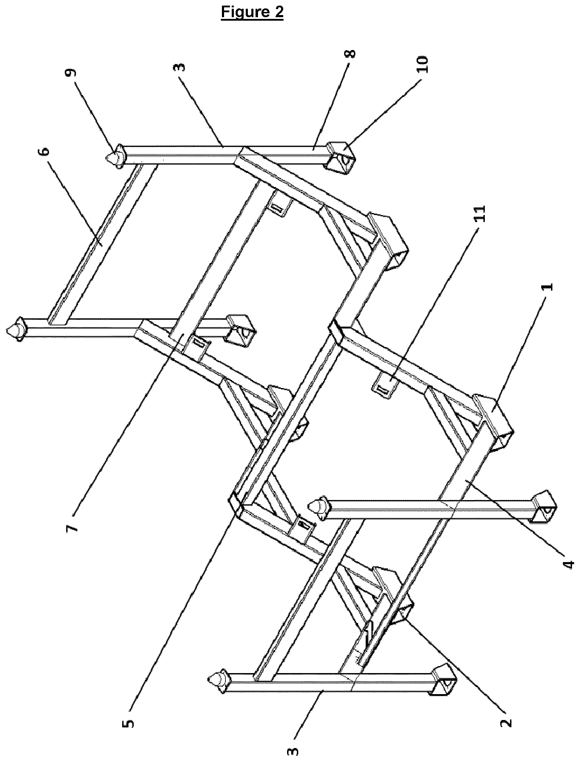

Figure 2.- Example of the invention for vertical stacking.

List of references and figures:
1. First frontal structure
2. Second frontal structure
3. Vertical elements
4. Longitudinal elements of the frontal structures
5. Central crossbar
6. Upper side
7. Lateral crossbars
8. Lower extension of the vertical elements
9. Male element
10. Female element
11. Support element

### PREFERRED EMBOIDIMENTS OF THE INVENTION

In the following detailed description of the preferential realizations, reference is made to the attached drawings that are part of this report, and in which specific preferential realizations in which the invention can be carried out are shown as an illustration. These realizations are described in sufficient detail to allow experts in the technique to carry out the invention, and it is understood that other realizations can be used and that structural, mechanical, electrical and/or chemical logical changes can be made without departing from the scope of the invention. To avoid details that are not necessary to allow experts in the technique to carry out the detailed description, it should not, therefore, be taken in a limiting sense.

Specifically, the present invention proposes a support for barrels that comprises at least a first frontal structure 1, at least a second frontal structure 2, with at least four vertical elements 3, which is characterized by:
- the first frontal structure 1 and the second frontal structure 2 comprise at least two longitudinal elements 4, configured in a divergent or substantially divergent way according to an ascending direction, defining a figure in the shape of a W;
- the first frontal structure 1 and the second frontal structure 2 are joined by at least: a central crossbar 5, two upper crossbars 6, and two lateral crossbars 7, which will be located in the lateral or substantially lateral zone of the first frontal structure 1 and/or the second frontal structure 2;
- the vertical elements 3 are located at the vertices of the support and are configured to support the central crossbars 5 of the support for barrels stacked above.

In this way, a modular structure is achieved that serves as a support for at least two barrels, which allows the use without interference of external devices, such as a double barrel washer, and that can be stacked according to a three-bolillo configuration.

In a preferred embodiment of the previous realization, the support comprises at least one male element 9 at a first end, preferably the upper one, and a female element 10 at a second end, preferably the lower one; achieving a male-linked union between the different stacked supports.

Preferably, the male elements 9 will include a curved or substantially curved shape, avoiding pointed surfaces that may cause accidents or damage during their use.

In a preferential realization, the vertical elements 3 include a lower extension 8, which will serve as a support on the vertical elements 3 of the immediately lower barrel support.

According to the previous realization, the invention proposes a lower extension 8 of the vertical elements 3, which will allow stacking according to a vertical configuration, where it will not be the central crossbars 5 that rest on the vertical elements 3 of the immediately lower support; but it will be the vertical elements 3 themselves, with their lower extensions 8, that rest on it, achieving the aforementioned vertical configuration of the stacking.

In a preferred realization, the support comprises at least one support element 11, on which the barrels stored in the invention will be supported. And that they will be able to understand rolling elements, such as wheels or crazy balls, that will allow easy manipulation of the barrels.

Sufficiently described the nature of the present invention, as well as the way to put it into practice, it is not considered necessary to make its explanation more extensive so that any expert in the field understands its scope and the advantages that derive from it, stating that, within its essentiality, it may be put into practice in other forms of realization that differ in detail from the one indicated by way of example, and to which the protection that is obtained will also reach provided that its fundamental principle is not altered, changed or modified.

## Claims

1. **Support for barrels** comprising at least one first front structure (1), at least one second front structure (2), and at least four vertical elements (3), **characterized in that:**
∘ the first frontal structure (1) and the second frontal structure (2) comprise at least two longitudinal elements (4) configured in a divergent or substantially divergent way according to an ascending direction;
∘ the first frontal structure (1) and the second frontal structure (2) are joined by at least one central crossbar (5), at least two upper crossbars (6) and at least two lateral crossbars (7) located in the lateral or substantially lateral zone of the first frontal structure (1) and/or the second frontal structure (2);
∘ the vertical elements (3) are located at the vertices of the support and are configured to support the central crossbars (5) of the above-stacked barrel support.

2. **Support for barrels** according to the first claim **characterized in that** it comprises a male element (9) at a first end, and a female element (10) at a second end.

3. **Support for barrels** according to the previous claim **characterized in that** the male element (9) comprises a curved or substantially curved shape.

4. **Support for barrels** according to the first claim **characterized in that** the vertical elements (3) comprise a lower extension (8) configured to rest on the vertical elements (3) of the immediately lower barrel support.

5. **Support for barrels** according to the first claim **characterized in that** it comprises comprising at least one support element (11).

6. **Support for barrels** according to the previous claim **characterized in that** the support elements (11) comprise at least one rolling element.
